# EUROPÄISCHE PATENTSCHRIFT

(11) **EP 2 212 590 B1**
(45) Veröffentlichungstag und Bekanntmachung des Hinweises auf die Patenterteilung: **31.10.2012**
(21) Anmeldenummer: 08854070.3
(22) Anmeldetag: 21.11.2008
(51) Int. Cl.: B02C 15/00, F16H 57/033, F16H 57/025, F16H 57/038

(54) **STIRNRADGETRIEBE**
SPUR GEAR
ENGRENAGE CYLINDRIQUE

(30) Priorität: 28.11.2007 DE 102007057608
(43) Veröffentlichungstag der Anmeldung: 04.08.2010
(73) Patentinhaber: Siemens Aktiengesellschaft, 80333 München (DE)
(72) Erfinder: MEYER, Thomas, 52223 Stolberg (DE); UEBBING, Dietmar, 46395 Bocholt (DE)
(74) Vertreter: Wolff, Harry
(86) Internationale Anmeldenummer: PCT/EP2008/066018
(87) Internationale Veröffentlichungsnummer: WO 2009/068484

(56) Entgegenhaltungen:
- EP-A- 1 717 488
- DE-C1- 3 320 037
- DE-C1- 3 712 562
- DE-C1- 4 227 512
- DE-U1- 9 111 017

## Beschreibung

Die Erfindung betrifft ein Stirnradgetriebe zum Antrieb eines Zahnkranzes an einer Arbeitsmaschine mit den Merkmalen des Oberbegriffes des Anspruches 1. Ein solches Getriebe ist aus DE 91 11 017 U1 bekannt.

Bekannte Zahnkranzantriebe treiben insbesondere Arbeitsmaschinen im oberen Leistungsbereich an. Dabei verlaufen die Achsen der Arbeitsmaschinen hauptsächlich in vertikaler oder horizontaler Richtung. Solche Antriebe sind z. B. an Schüsselmühlen, Mischtrommeln, Brechern, Rohrmühlen oder Drehrohröfen zu finden. Besonderes Kennzeichen solcher Arbeitsmaschinen ist ein großer direkt an den Arbeitsmaschinen angebrachter Zahnkranz, der sich in räumlicher Nähe zum eigentlichen Verarbeitungsprozess befindet. Der Zahnkranz bildet häufig zusammen mit weiteren Getriebestufen einen Antriebsstrang zur Wandlung der Antriebsleistung eines Elektromotors. Die weiteren Getriebestufen befinden sich dabei in einem eigenen Getriebegehäuse, das zu der Arbeitsmaschine über feste Anflanschverbindungen oder die exakte Ausrichtung auf einem gemeinsamen Fundament in den Antriebsstrang eingefügt wird.

Aus der DE 35 34 940 A1 ist eine Antriebsvorrichtung für einen Zahnkranz eines Drehrohres bekannt, bei dem sich die Getriebestufen eines Untersetzungsgetriebes in einem eigenen Gehäuse befinden. Das bekannte Getriebe ist in direkter Nachbarschaft zur Arbeitsmaschine auf einem gemeinsamen Fundament angeordnet. Die Antriebsleistung wird in dem Getriebegehäuse zur höheren Leistungsübertragung mechanisch auf zwei mit dem Zahnkranz kämmende Abtriebsritzel verzweigt. Für die beiden Abtriebsritzel sind zur freien Einstellbeweglichkeit gegenüber dem Zahnkranz jeweils Balligzahnkupplungen und sphärische Lagerungen vorgesehen. Nachteilig an einer solchen Antriebsvorrichtung ist in dem Getriebegehäuse die notwendige freie axiale Einstellbeweglichkeit einer Zwischenstufe zur mechanischen Verzweigung der Antriebsleistung. Als Einschränkung aus der erforderlichen axialen Beweglickeit ist die Welle dieser Zwischenstufe vorzugsweise in horizontaler Lage abzustützen. Ebenso nachteilig ist die feste Positionierung der beiden Zahnritzel zueinander in einem gemeinsamen Gehäuse. Dadurch muss das Getriebe mit der Arbeitsmaschine auf einem gemeinsamen Fundament relativ genau ausgerichtet werden. Die Balligzahnkupplungen können überlagerte Ausrichtungsfehler nicht kompensieren und sollen hauptsächlich Verzahnungsfehler ausgleichen.

Die DE 39 31 116 A1 beschreibt eine Antriebsvorrichtung für eine Vertikalmühle, bei der das Gehäuse des Vorsatzgetriebes fest mit der Mühle verschraubt ist. Nachteilig an dieser Verbindung ist die notwendige exakte Positionierung der weit auseinander liegenden Achsen von Antriebsritzel und Zahnkranz zueinander. Weiterhin hat die Einleitung der axialen Mühlenkräfte über das Axial-Drucklager in das gemeinsame Getriebegehäuse nachteilige Folgewirkungen auf den Verzahnungseingriff im Vorsatzgetriebe. Der gemeinsame große Getriebe- und Mühlenlagerinnenraum begünstigt aufgrund unterschiedlicher Ursachen die schnelle Verschmutzung des gesamten gemeinsam genutzten Schmieröls und erfordert einen Kompromiss bei der Wahl der Ölviskosität hinsichtlich der Anforderungen von Verzahnung und Axialgleitlager. Ebenso problematisch ist die mechanische Leistungsverzweigung im Vorsatzgetriebe infolge der nicht vorhandenen Kompensation überzähliger Zwangskräfte. Dazu reicht die kippbewegliche Lagerung des Antriebsritzels nicht aus.

Die JP 2005052799 A zeigt eine Antriebsvorrichtung für einen vertikalen Brecher, der entweder über einen Zahnkranz an der drehbaren Bodenscheibe der Maschine oder über ein normales mehrstufiges Kegelradgetriebe angetrieben wird, bei dem die Getriebeabtriebswelle mit der Zentralachse der Maschine zusammenfällt. Für die Wartung soll die Demontage der Getriebeeinheit vereinfacht werden, indem das gesamte Untersetzungsgetriebe sich als eine Einheit von der Arbeitsmaschine abschrauben lässt. Nachteilig an einem solchen Konzept ist die fehlende Einstellbeweglichkeit an der Abtriebsstufe, um Stoßbelastungen aus dem Verarbeitungsprozess in dem Brecher aus dem Getriebe herauszuhalten. Die offenbarte Abstützung des Mahltellers über Wälzlager reicht insbesondere bei hohen Mahlleistungen zur Entlastung der Verzahnung von Verarbeitungsprozesskräften in der zusammengeschraubten Gehäuseeinheit aus Getriebe- und Maschinengehäuse nicht aus.

Der Erfindung liegt die Aufgabe zugrunde, ein gattungsgemäßes Getriebe für den Antrieb eines Zahnkranzes so zu gestalten, dass externe zusätzliche Störeinflüsse am Zahneingriff zwischen Zahnkranz und Abtriebsritzel aus dem Antriebsstrang herausgeleitet werden können. Solche störenden Einflüsse rühren z. B. aus der Ausrichtung des Getriebes und einer insbesondere als Mühle ausgebildeten Arbeitsmaschine oder aus dem Mahlprozess der angeschlossenen Mühle her und werden nicht in der Mühle abgestützt. Darüber hinaus muss sich die Gesamtübersetzung in einem solchen Antriebsstrang durch den möglichen Austausch von Einzelkomponenten unter der Verwendung vieler Gleichteile möglichst vielfältig anpassen lassen. Daneben soll das modulare Antriebskonzept wartungsfreundlich gestaltet sein.

Die Aufgabe wird bei einem gattungsgemäßen Stirnradgetriebe erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Stirnradgetriebe wird die Belastung am Zahnangriff von Zahnrad und Abtriebsritzel über den ersten Gehäuseteil des Getriebegehäuses direkt in das Fundament eingeleitet. Gleichzeitig werden in dem zweiten in sich starren Gehäuseteil des Getriebegehäuses die Verzahnungskräfte in den Getriebeeingangsstufen nicht von diesen externen Störgrößen beeinträchtigt.

Die Abtriebsstufe aus der Paarung des einstellbeweglichen Abtriebsritzels mit dem Zahnkranz wird möglichst weitgehend von der oder den Getriebeeingangsstufen zur Drehzahluntersetzung getrennt. Dazu ist das Getriebegehäuse so gestaltet, dass ein erster Gehäuseteil das einstellbare Abtriebsritzel so umschließt, dass die Verzahnung in einer begrenzten Gehäuseausnehmung mit dem Zahnkranz der Arbeitsmaschine kämmen kann und dass die Abtriebswelle mit den einstellbeweglichen Antriebsritzel zur Aufnahme des Zahnrades der Getriebeeingangsstufe in einen zweiten Gehäuseinnenraum ragt.

Die Kraft- und Drehzahleinleitung in den Zahnkranz der Arbeitsmaschine muss in möglichst kurzem Abstand zum Verarbeitungsprozess in der Arbeitsmaschine erfolgen. Insbesondere bei vertikalen Mühlen führt eine solche Forderung aufgrund vor- und nachgelagerter Einrichtungen an der Arbeitsmaschine zu einem größeren Abstand zwischen Zahnkranz und dem Fundament. Das benachbarte Stirnradgetriebe zum Antrieb des Zahnkranzes muss den vorhandenen Bauraum ebenfalls überbrücken. Zu dem Zweck sind an dem ersten Gehäuseteil mit dem einstellbaren Abtriebsritzel die Seitenwände mit den bodenseitigen Fußleisten länger als die erforderliche Bauhöhe des eigentlichen Getriebeinnenraums gestaltet. Eine solche Gehäuseform mit den langen verrippten Seitenwänden erlaubt es, die zusätzlichen externen Störgrößen, wie die dynamischen Betriebskräfte, aus dem Verarbeitungsprozess am Zahneingriff von Zahnkranz und Abtriebsritzel aus dem Antriebsstrang derart abzuleiten, dass das Getriebegehäuse über Biegebeanspruchung die Belastung direkt in die Fundamentschrauben weiterleitet. Die Seitenwände wirken somit als Stützhebel. Die besondere Gehäusegestaltung ermöglicht trotzdem eine in sich besonders verformungssteife Gehäusekonstruktion, die durch die Rippenstruktur gleichzeitig zu einer vergleichsweise leichtbauenden Einheit führt. Darüber hinaus spart das besondere Gestaltungsmerkmal hohe Kosten für den Bau der Fundamente ein, da diese kleiner werden können.

Ein Ausführungsbeispiel der Erfindung ist in der Zeichnung dargestellt und wird im Folgenden zusammen mit den Vorteilen der Erfindung näher erläutert. Es zeigen:
Fig. 1 perspektivisch ein Getriebegehäuse und
Fig. 2 im Längsschnitt das in dem Getriebegehäuse nach Fig. 1 angeordnete Getriebe.

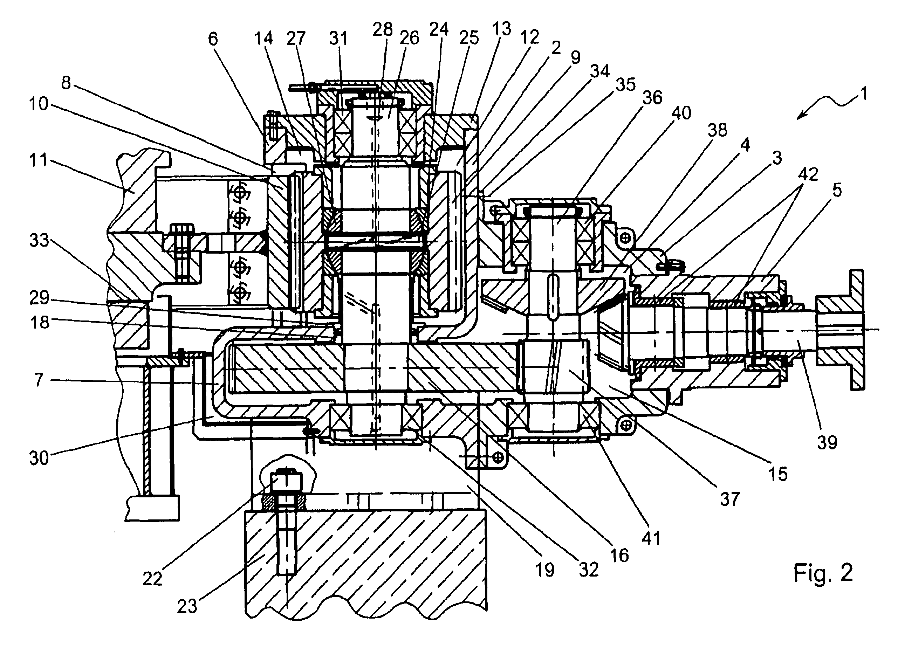

Das als Kegelstirnradgetriebe ausgebildete Getriebe dient zum Antrieb einer in Fig. 2 nur teilweise angedeuteten Arbeitsmaschine 11. Das Getriebe besteht aus einer als Zahnkranzstufe ausgebildeten Abtriebsstufe und einer oder mehreren Getriebeeingangsstufen, die später beschrieben werden. Die Arbeitsmaschine 11 ist im vorliegenden Fall eine Schüsselmühle, an deren zylindrischem Umfang ein die Schüsselmühle umschließender Zahnkranz 10 befestigt ist. Die Erfindung kann auch bei anderen Arbeitsmaschinen, wie Brechern, Rohrmühlen, Mischtrommeln oder Drehrohröfen angewendet werden.

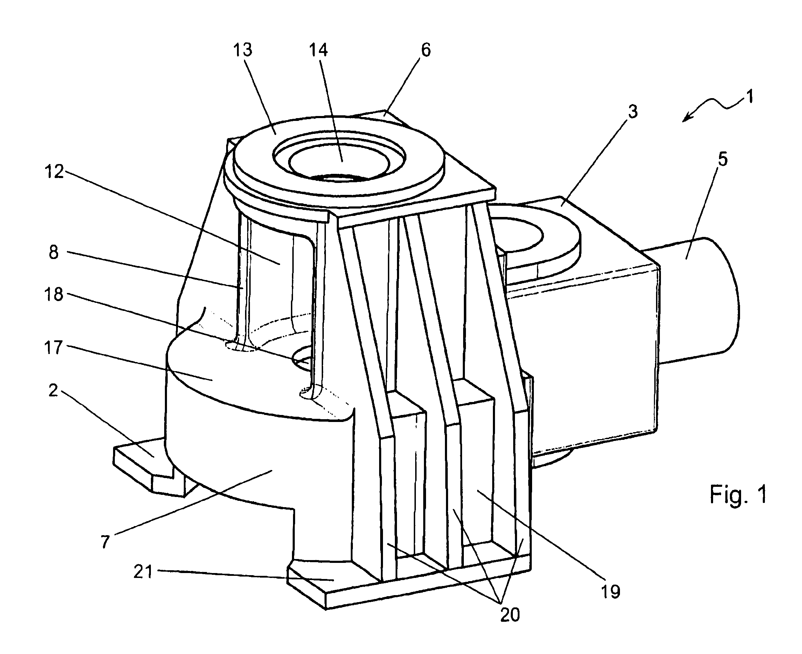

Das Getriebegehäuse 1 zur Aufnahme des in Fig. 2 gezeigten Getriebes besteht nach Fig. 1 aus einem vorderen, ersten Gehäuseteil 2. Im hinteren Bereich des Getriebegehäuses 1 schließt sich an den ersten Gehäuseteil 2 ein zweiter Gehäuseteil 3 mit einer herausragenden Flanschbuchse 5 an.

Der erste Gehäuseteil 2 ist im oberen Bereich 6 im Durchmesser kleiner und in der Höhe größer als im unteren Bereich 7. Im oberen Bereich 6 enthält der erste Gehäuseteil 2 einen ersten Innenraum 12, der durch eine Zwischenplatte 17 von einem zweiten Innenraum 15 im unteren Bereich 7 getrennt ist. In der Zwischenplatte 17 befindet sich eine Bohrung 18, in der ein Dichtungsmechanismus 29 angeordnet ist, der eine Abdichtung zwischen den beiden Innenräumen 12, 15 bewirkt.

Innerhalb des ersten Gehäuseteiles 2 befindet sich die Abtriebsstufe oder Zahnkranzstufe, die eine Abtriebswelle 26 umfasst. Die Abtriebswelle 26 ist in zwei Lagern 31, 32 gelagert, die im oberen Bereich 6 und im unteren Bereich 7 vorgesehen sind. Dabei durchdringt die Abtriebswelle 26 die Bohrung 18 in der Zwischenplatte 17. Die Abtriebswelle 26 trägt ein Abtriebsritzel 9 und ein Zahnrad 16, das zu der Getriebeeingangsstufe gehört. Die zylindrischen Wände des im oberen Bereich 6 liegenden ersten Innenraumes 12 umschließen eng das Abtriebsritzel 9 und lassen lediglich eine Gehäuseausnehmung 8 frei, durch die das Abtriebsritzel 9 aus dem ersten Gehäuseteil 2 herausragt und in den auf der Arbeitsmaschine 11 befestigten Zahnkranz 10 eingreift. Durch die enge Umschließung des Abtriebsritzels 9 durch eine zylindrische Wand des oberen, ersten Innenraumes 12 wird der Eintritt von Schmutz aus der Umgebung durch die Gehäuseausnehmung 8 begrenzt.

An der dem Zahnkranz 10 der Arbeitsmaschine 11 zugewandten Seite folgt die Gestaltung des ersten Gehäuseteiles 2 des Getriebegehäuses 1 im unteren Bereich 7 der zylindrischen Gestalt des innenliegenden Zahnrades 16 der Getriebeeingangsstufe. Der stirnseitig gerundete untere Bereich 7 des Gehäuseteiles 2 geht an den Seiten in lange Seitenwände 19 über, die das Getriebe nach unten überragen. Die Seitenwände 19 sind mit Rippen 20 versehen, die die gesamte Struktur des ersten Gehäuseteils 2 versteifen. Die Rippen 20 sind mit Fußleisten 21 verbunden, die über Fundamentschrauben 22 auf einem Fundament 23 befestigt sind. Die Form der Rippen 20, bei der das größere Widerstandsmoment in Richtung der Verzahnungsumfangskraft zwischen Zahnkranz 10 und Abtriebsritzel 9 der Zahnkranzstufe oder Abtriebsstufe zeigt, bewirkt die notwendige Stützwirkung des Hebelarms "Gehäuse" zur Ableitung der Verzahnungskräfte und der dynamischen Zusatzbeanspruchung aus dem Verarbeitungsprozess in der Arbeitsmaschine 11 in das Fundament 23.

In dem zweiten Gehäuseteil 3 ist die der Abtriebsstufe vorgeschaltete Getriebeeingangsstufe untergebracht, die vorzugsweise als Kegelstirnradgetriebe 4 ausgebildet ist. Anstelle einer Getriebeeingangsstufe können auch mehrere Getriebeeingangsstufen vorgesehen werden.

Der das Kegelstirnradgetriebe 4 aufnehmende zweite Gehäuseteil 3 ist ohne Verbindung mit dem Fundament 23 an der rückwärtigen Wandfläche des ersten Gehäuseteils 2 angeschraubt. Durch diese Gehäuseunterteilung wird das Getriebegehäuse 1 als Ganzes der lastabhängigen Verformung des ersten Gehäuseteils 2 folgen und erfährt keine störenden Relativverlagerungen zwischen den Gehäuseteilen 2, 3, die den Verzahnungseingriff in den Stufen des Getriebes nachteilig beeinträchtigen könnten.

Das mit dem Zahnkranz 10 der Arbeitsmaschine 11 kämmende Abtriebsritzel 9 ist einstellbeweglich ausgebildet. Mittig in der zylindrischen Innenbohrung 24 im Abtriebsritzel 9 befindet sich die Innenverzahnung einer Balligzahnkupplung 25. An der Abtriebswelle 26 ist im oberen Drittel die Außenverzahnung dieser Balligzahnkupplung 25 angebracht. Benachbarte sphärische Gelenklager 27 unterstützen die Führung des einstellbeweglichen Antriebsritzels 9. Durch diese Einstellbeweglichkeit des Abtriebsritzels 9 zu dem Zahnkranz 10 der Arbeitsmaschine 11 lassen sich Zwangskräfte aus dem Verzahnungseingriff infolge elastischer Verformungen sowie Ausrichtungs- und Fluchtungsfehler wirksam vermeiden. Die Balligzahnkupplung 25 und die sphärischen Gelenklager 27 werden durch eine durch die Abtriebswelle 26 führende Ölbohrung 28 mit Schmieröl versorgt.

Das untere Ende der Abriebswelle 26 ragt aus dem offenen ersten Innenraum 12 im oberen Bereich 6 des ersten Gehäuseteils 2 in den darunter liegenden zweiten Innenraum 15 im unteren Bereich 7. Hier sitzt das Zahnrad 16 der Getriebeeingangsstufe auf der Abtriebswelle 26. Zwischen den beiden Innenräumen 12, 15 verhindert der in der Bohrung 18 vorgesehene Dichtungsmechanismus 29 den Übertritt von Betriebsstoffen. Die hierdurch ermöglichte Trennung der Schmierkreisläufe erlaubt eine an unterschiedliche Bedingungen, die am Zahnkranz 10 und im Kegelstirnradgetriebe 4 vorliegen, in vorteilhafter Weise angepasste Schmierstoffauswahl hinsichtlich der Viskosität und Additivierung.

Aus dem offenen Zahneingriff am Zahnkranz 10 und aus der Balligzahnkupplung 25 kann das eingespritzte Schmieröl über die Zwischenplatte 17, die leicht nach vorn geneigt ist, in eine Auffangrinne 30 an der Arbeitsmaschine 11 abfließen.

Der erste Gehäuseteil 2 des Getriebegehäuses 1 weist eine obere Montageöffnung 14 auf, die größer ist als das Antriebsritzel 9. Auf der Oberseite des Getriebegehäuses 1 umgibt ein Flansch 13 die große Montageöffnung 14. Beim Zusammenbau wird die Abtriebsritzelwelle 26 mit dem Abtriebsritzel 9 komplett durch die Montageöffnung 14 in das Getriebegehäuse 1 eingefügt und dann auf das Zahnrad 16 gesteckt.

In der Arbeitsmaschine 11 befinden sich in der Nähe des Zahnkranzes 10 zur Aufnahme der gewöhnlich vorhandenen Betriebskräfte Axial- und Radialgleitlager 33. Für den Fall des Auftretens hoher dynamischer Betriebsbeanspruchungen wirken jedoch auch Kräfte über den Zahneingriff zwischen Zahnkranz 10 und Abtriebsritzel 9 auf das Getriebe zum Antrieb des Zahnkranzes 10 ein. Die hohen Verzahnungskräfte der Zahnkranzstufe werden direkt über den ersten Gehäuseteil 2 in das Fundament 23 abgeleitet. Dadurch bleiben die nachfolgenden Gehäuse- und Getriebeteile frei von hohen Verzahnungskräften und Gehäuseverformungen, was deutlich geringere Verformungseinflüsse in den Zahneingriffen bedeutet. Die erfindungsgemäße Gestaltung des Getriebegehäuses 1 mit dem in sich starren ersten Gehäuseteil 2 und der Einleitung der Betriebskräfte aus der Arbeitsmaschine 11 am oberen Bereich der Abtriebswelle 26 führt zu der geforderten Abstützung der externen zusätzlichen dynamischen Betriebskräfte über den ersten Gehäuseteil 2 in das Fundament 23 und zu der dadurch sichergestellten Entlastung der nachfolgenden Getriebestufen von Verformungseinflüssen in den Zahneingriffen.

Die Getriebeeingangstufe als Kegelstirnradgetriebe 4 ist in dem zweiten Gehäuseteil 3 untergebracht. An der dem Zahnkranz 10 zugewandten Seite weist der zweite Gehäuseteil 3 einen Gehäuseflansch 34 auf, der an dem ersten Gehäuseteil 2 anliegt. Die Gehäuseteile 2, 3 sind mit Gehäuseschrauben 35 lösbar miteinander verbunden. Durch diese Unterteilung des Getriebegehäuses 1 für den Antrieb der Arbeitsmaschine 11 mit dem Zahnkranz 10 lässt sich insbesondere bei Wartungsarbeiten das Modul mit dem Kegelstirnradgetriebe 4 besonders schnell austauschen. Es entfallen deshalb umfangreiche Arbeiten zur Neuausrichtung des gesamten Getriebes im Antriebsstrang. Durch die fehlende Bodenberührung kann der insgesamt steife zweite Gehäuseteil 3 möglichen elastischen Verformungen am ersten Gehäuseteil 2 zwangsfrei folgen und folglich unterliegen die Getriebestufen des Getriebes keinen zusätzlichen Belastungen aus dem in der Arbeitsmaschine 11 ablaufenden Verarbeitungsprozess.

Die als Kegelstirnradgetriebe 4 ausgebildete Getriebeeingangsstufe besteht aus einer Kegelradwelle 36, auf der ein Kegelrad 38 und ein Ritzel 37 drehfest befestigt sind. Das Ritzel 37 kämmt mit dem auf der Abtriebswelle 26 angeordneten Zahnrad 16, und das Kegelrad 38 kämmt mit einem Kegelritzel. Das Kegelritzel ist drehfest auf einer Kegelritzelwelle 39 befestigt, die in vorzugsweise als Gleitlager ausgebildeten Lagern 42 in der Flanschbuchse 5 gelagert ist. Anstelle von Gleitlagern sind auch Wälzlager möglich.

Zweckmäßigerweise liegt das einstellbewegliche Abtriebsritzel 9 in unmittelbarer Nachbarschaft zu dem Kegelrad 38. Diese Anordnung der Elemente stellt sicher, dass der Hebelarm der Verzahnungsumfangskraft der Zahnkranzstufe zum Fundament 23 hin klein gehalten wird. Somit ergibt sich eine deutlich geringere Beanspruchung der Fundamentverschraubung 22. Die gewünschte Wirkung dieser Anordnung führt zu einem relativ großen Achsabstand zwischen der Abtriebswelle 26 und der Kegelradwelle 36. Als Folge aus diesem großen Achsabstand hat das Zahnrad 16 einen großen Durchmesser. Die Paarung aus Zahnrad 16 und Ritzel 37 lässt sich in besonders vorteilhafter Weise unterhalb von dem Abtriebsritzel 9 und dem Kegelrad 38 positionieren.

Die Kegelradwelle 36 ist in den Lagern 40, 41 gelagert. Hier können zur Verwendung möglichst gleicher Bauteile das untere Lager 32 der Abtriebswelle 26 und das untere Lager 41 der Kegelradwelle 36 sowie das obere Lager 31 der Abtriebswelle 26 und das obere Lager 40 der Kegelradwelle 36 die gleiche Bauart aufweisen.

Ein weiterer Vorteil aus dem modularen Aufbau des Getriebegehäuses 1 ist die Möglichkeit, die Gesamtgetriebeübersetzung durch den Austausch eines Kegelradgetriebes 4 mit einer Übersetzung i₁ im zweiten Gehäuseteil 3 durch ein anderes Kegelradgetriebe mit einer anderen Übersetzung i₂ in einem anderen identischen zweiten Gehäuseteil schnell zu ändern. Durch den einfachen Austausch des Kegelrades 38 und der Kegelritzelwelle 39 gegen andere Kegelradstufen mit einer anderen Übersetzung (Zähnezahlverhältnis) lässt sich bei einer unveränderten Weiterverwendung der anderen Bauteile sehr einfach eine Baureihe von erfindungsgemäßen Getrieben für den Antrieb eines Zahnkranzes 10 erzeugen. Diese Baureihe baut somit auf einem Gleichteilekonzept auf, das für alle Antriebe der Baureihe zu einer wirtschaftlich besonders günstigen Lösung führt. Darüber hinaus kann die Gesamtübersetzung auch durch andere Zähnezahlen am Zahnkranz 10 bewirkt werden. Wenn beispielsweise an dem Zahnkranz 10 vier (in Abhängigkeit der Mühlengröße auch mehr) unterschiedliche Zähnezahlen wählbar sind und auch für die Kegelradstufe 37, 38 jeweils vier verschiedene Übersetzungen zu Verfügung stehen, dann sind mit einer Getriebegröße sechzehn verschiedene Übersetzungen möglich bei einem gleichzeitig unverändertem Aufbau der relativ teueren Abtriebsstufe aus Abtriebsritzel 9, Zahnrad 16 und Abtriebswelle 26. Wirtschaftlich vorteilhaft können dann die relativ teueren Baugruppen in größeren Stückzahlen gefertigt werden und damit zu einer Kostenbegrenzung beitragen. Der Standardisierungsgrad ist im Vergleich zu herkömmlichen Antriebskonzepten deutlich erhöht.

## Patentansprüche

1. Stirnradgetriebe, insbesondere Kegelstirnradgetriebe mit einer oder mehreren Getriebestufen zum Antrieb einer Arbeitsmaschine (11), die von einem Zahnkranz (10) umschlossen ist, und mit einem die Getriebestufen umschließenden Getriebegehäuse (1), das direkt auf einem Fundament (23) befestigt ist,
wobei ein auf einer Abtriebswelle (26) einer Abtriebsstufe angeordnetes, einstellbewegliches Abtriebsritzel (9) mit dem Zahnkranz (10) kämmt,
wobei ein erster Gehäuseteil (2) die Abtriebsstufe mit der Abtriebswelle (26) und dem einstellbeweglichen Abtriebsritzel (9) umschließt, und wobei der erste Gehäuseteil (2) Seitenwände (19) aufweist, die das Getriebe überragen und auf dem Fundament (23) aufruhen,
**dadurch gekennzeichnet dass**, das Getriebegehäuse (1) aus einem ersten, in sich steifen Gehäuseteil (2) und aus einem zweiten starren Gehäuseteil (3) besteht, und dass der zweite Gehäuseteil (3) ohne Berührung mit dem Fundament (23) an einer Stirnseite an dem ersten Gehäuseteil (2) befestigt ist, und dass das Getriebegehäuse (1) zwei voneinander getrennte Innenräume (12, 15) aufweist, und dass die Abtriebswelle (26) mit dem einstellbeweglichen Abtriebsritzel (9) in dem ersten, in sich steifen Gehäuseteil (2) gelagert ist und in beide Innenräume (12, 15) des Getriebegehäuses (1) ragt, und dass Innenwände des ersten Gehäuseteiles (2) innerhalb des ersten Innenraumes (12) mit Ausnahme einer Gehäuseausnehmung (8) das einstellbewegliche Abtriebsritzel (9) umschließen, dass das Abtriebsritzel (9) aus der Gehäuseausnehmung (8) herausragt und in den Zahnkranz (10) eingreift und dass die Abtriebswelle (26) zur Aufnahme eines Zahnrades (16) der Getriebeeingangsstufe in den zweiten Innenraum (15) des Getriebegehäuses (1) hineinragt.

2. Getriebe nach Anspruch 1, **dadurch gekennzeichnet, dass** jeder Innenraum (12, 15) des Getriebegehäuses (1) einen eigenen Schmiermittelkreislauf aufweist.

3. Getriebe nach Anspruch 1, **dadurch gekennzeichnet, dass** die Getriebeeingangsstufe als Kegelstirnradgetriebe (4) ausgebildet ist und eine Kegelradwelle (36) mit einem Kegelrad (38) und eine Kegelritzelwelle (39) mit einem Kegelritzel aufweist.

4. Getriebe nach Anspruch 1, **dadurch gekennzeichnet, dass** der zweite Gehäuseteil (3) die Getriebeeingangsstufe oder Getriebeeingangsstufen umschließt.

5. Getriebe nach Anspruch 3, **dadurch gekennzeichnet, dass** das einstellbewegliche Abtriebsritzel (9) der Abtriebsstufe in der gleichen oberen Getriebehälfte liegt wie das Kegelrad (38) des Kegelstirnradgetriebes (4).

6. Getriebe nach Anspruch 3, **dadurch gekennzeichnet, dass** Lager (31, 32) der Abtriebswelle (26) und Lager (40, 41) der Kegelradwelle (36) der Getriebeeingangsstufe paarweise gleich sind.

7. Getriebe nach Anspruch 6, **dadurch gekennzeichnet, dass** die Lager (31, 32, 40, 41) der Getriebestufen als Wälzlager ausgeführt sind.

8. Getriebe nach Anspruch 3, **dadurch gekennzeichnet, dass** die Kegelritzelwelle (39) in einer Flanschbuchse (5) in Gleitlagern (42) abgestützt ist.

9. Getriebe nach Anspruch 1, **dadurch gekennzeichnet, dass** für das einstellbewegliche Abtriebsritzel (9) eine Oleinspritzvorrichtung angeordnet ist und dass die Öleinspritzvorrichtung mit dem Schmierkreislauf auch für eine Balligzahnkupplung (25) des Abtriebritzels (9) vorgesehen ist.

10. Getriebe nach Anspruch 1, **dadurch gekennzeichnet, dass** die Innenräume (12, 15) des Getriebegehäuses (1) durch eine Zwischenplatte (17) voneinander getrennt sind, in der eine Bohrung (18) für den Durchtritt der Abtriebswelle (26) ange ordnet ist und dass in der Bohrung (18) ein Dichtungsmechanismus (29) angeordnet ist.

11. Getriebe nach Anspruch 10, **dadurch gekennzeichnet, dass** das Schmieröl aus dem Zahneingriff zwischen dem Zahnkranz (10) und dem einstellbeweglichen Abtriebsritzel (9) über die Zwischenplatte (17) in eine Auffangrinne (30) an der Arbeitsmaschine (11) abläuft.

## Claims

1. Spur gear unit, especially a helical bevel gearbox, having one or more gear stages for driving a driven machine (11), which is enclosed by an annular gear (10), and having a gear housing (1) enclosing the gear stages which is directly attached to a base (23), wherein an adjustably movable output pinion (9) disposed on an output shaft (26) of a secondary gear meshes with the annular gear (10),
wherein a first housing part (2) encloses the secondary gear with the output shaft (26) and the adjustably movable output pinion (9), and wherein the first housing part (2) has side walls (19) which project above the gear unit and rest on the base (23),
**characterised in that** the gear housing (1) consists of a first, intrinsically inflexible housing part (2) and a second rigid housing part (3), and that the second housing part (3) is attached to an end face on the first housing part (2) without touching the base (23), and that the gear housing (1) has two internal spaces (12, 15) isolated from one another, and that the output shaft (26) is mounted with the adjustably movable output pinion (9) in the first, intrinsically inflexible housing part (2) and projects into both internal spaces (12, 15) of the gear housing (1), and that internal walls of the first housing part (2) enclose the adjustably movable output pinion (9) inside the first internal space (12) with the exception of a housing cutout (8), that the output pinion (9) projects out of the housing cutout (8) and engages with the annular gear (10) and that the output shaft (26) projects into the second internal space (15) of the gear housing (1) to accommodate an annular gear (16) of the gear input stage.

2. Gear unit according to claim 1, **characterised in that** each internal space (12, 15) of the gear housing (1) has its own lubricant circuit.

3. Gear unit according to claim 1, **characterised in that** the gear input stage is designed as a helical bevel gearbox (4) and has a bevel gear shaft (36) with a bevel gear wheel (38) and a bevel gear pinion shaft (39) with a bevel gear pinion.

4. Gear unit according to claim 1, **characterised in that** the second housing part (3) encloses the gear input stage or gear input stages.

5. Gear unit according to claim 3, **characterised in that** the adjustably movable output pinion (9) of the secondary gear lies in the same top gear unit half as the bevel gear wheel (38) of the helical bevel gearbox (4).

6. Gear unit according to claim 3, **characterised in that** pairs of bearings (31, 32) of the output shaft (26) and bearings (40, 41) of the bevel gear wheel shaft (36) of the gear input stage are identical.

7. Gear unit according to claim 6, **characterised in that** the bearings (31, 32, 40, 41) of the gear stages are designed as roller bearings.

8. Gear unit according to claim 3, **characterised in that** the bevel gear pinion shaft (39) is supported in a flange bush (5) in slide bearings (42).

9. Gear unit according to claim 1, **characterised in that** an oil injection device is disposed for the adjustably movable output pinion (9) and that the oil injection device with the lubricant circuit is also provided for a crowned gear coupling (25) of the output pinion (9).

10. Gear unit according to claim 1, **characterised in that** the internal spaces (12, 15) of the gear housing (1) are isolated from one another by an intermediate plate (17), in which a drill hole (18) for the passage of the output shaft (26) is disposed and that a sealing mechanism (29) is disposed in the drill hole (18).

11. Gear unit according to claim 10, **characterised in that** the lubricating oil flows out of the tooth meshing between the annular gear (10) and the adjustably movable output pinion (9) via the intermediate plate (17) into a drip channel (30) on the driven machine (11).

## Revendications

1. Engrenage cylindrique, notamment engrenage conique droit ayant un ou plusieurs étages d'engrenage pour l'entraînement d'une machine (11) produisant du travail, qui est entourée d'une couronne (10) dentée, et comprenant un carter (1) d'engrenage, qui entoure les étages d'engrenage et qui est fixé directement à un socle (23), un pignon (9) de sortie à mobilité de réglage est monté sur un arbre (26) de sortie d'un étage de sortie engrenant avec la couronne (10) dentée,
dans lequel une première partie (2) de carter entoure l'étage de sortie avec l'arbre (26) de sortie et le pignon (9) de sortie à mobilité de réglage et dans lequel la première partie (2) du carter a des parois (19) latérales qui dépassent de l'engrenage et reposent sur le socle (23),
**caractérisé en ce que** le carter (1) d'engrenage est constitué d'une première partie (2) en soi rigide et d'une deuxième partie (3) raide, et **en ce que** la deuxième partie (3) du carter est fixée sans contact avec le socle (23) sur un côté frontal à la première partie (2) de carter, et **en ce que** le carter (1) de l'engrenage a deux espaces (12, 15) intérieurs séparés l'un de l'autre, et **en ce que** l'arbre (26) de sortie, avec le pignon (9) de sortie à mobilité de réglage, est monté dans la première partie (2) de carter en soi rigide et pénètre dans les deux espaces (12, 15) intérieurs du carter (1) de l'engrenage, et **en ce que** des parois intérieures de la première partie (2) du carter entourent à l'intérieur du premier espace (12) intérieur le pignon (9) de sortie à mobilité de réglage, à l'exception d'un évidement (8) du carter, **en ce que** le pignon (9) de sortie sort de l'évidement (8) du carter et engrène dans la roue (10) dentée et **en ce que** l'arbre (26) de sortie pénètre pour la réception d'une roue (16) dentée de l'étage d'entrée de l'engrenage dans le deuxième espace (15) intérieur du carter (1) de l'engrenage.

2. Engrenage suivant la revendication 1, **caractérisé en ce que** chaque espace (12, 15) intérieur du carter (1) de l'engrenage a son propre circuit d'agent lubrifiant.

3. Engrenage suivant la revendication 1, **caractérisé en ce que** l'étage d'entrée de l'engrenage est constitué en engrenage (4) conique droit et a un arbre (36) de roue conique ayant une roue (38) conique et un arbre (39) de pignon conique ayant un pignon conique.

4. Engrenage suivant la revendication 1, **caractérisé en ce que** la deuxième partie (3) du carter entoure l'étage d'entrée de l'engrenage ou des étages d'entrée de l'engrenage.

5. Engrenage suivant la revendication 3, **caractérisé en ce que** le pignon (9) de sortie à mobilité réglable de l'étage de sortie se trouve dans la même moitié supérieure de l'engrenage que la roue (38) conique de l'engrenage (4) conique droit.

6. Engrenage suivant la revendication 3, **caractérisé en ce que** des paliers (31, 32) de l'arbre (26) de sortie et des paliers (40, 41) de l'arbre (36) de la roue conique de l'étage d'entrée de l'engrenage sont identiques par paire.

7. Engrenage suivant la revendication 6, **caractérisé en ce que** les paliers (31, 32, 40, 41) des étages de l'engrenage sont réalisés sous la forme de paliers à roulement.

8. Engrenage suivant la revendication 3, **caractérisé en ce que** l'arbre (39) du pignon conique s'appuie dans une douille (8) à brides dans des paliers (42) lisses.

9. Engrenage suivant la revendication 1, **caractérisé en ce qu'**un dispositif de projection d'huile est monté pour le pignon (9) de sortie à mobilité réglable et **en ce que** le dispositif de projection d'huile est prévu en ayant le circuit de lubrification aussi pour un accouplement (25) à dents bombées du pignon (29) de sortie.

10. Engrenage suivant la revendication 1, **caractérisé en ce que** les espaces (12, 15) intérieurs du carter (1) d'engrenage sont séparés l'un de l'autre par une plaque (17) intermédiaire, dans laquelle est pratiqué un trou (18) pour le passage de l'arbre (26) de sortie, et **en ce qu'**un mécanisme (29) d'étanchéité est disposé dans le trou (18).

11. Engrenage suivant la revendication 10, **caractérisé en ce que** de l'huile de lubrification sort de l'engrènement, entre la couronne (10) dentée et le pignon (9) d'entraînement à mobilité réglable, dans une rigole de réception sur la machine (1) produisant du travail en passant par la plaque (17) intermédiaire.
